# EUROPÄISCHE PATENTSCHRIFT

(11) **EP 0 581 035 B1**
(45) Veröffentlichungstag und Bekanntmachung des Hinweises auf die Patenterteilung: **17.01.1996**
(21) Anmeldenummer: 93110420.2
(22) Anmeldetag: 30.06.1993
(51) Int. Cl.: B29C 63/04

(54) **Verfahren zum Herstellen eines Kunststofformteils**
Method for manufacturing a moulded plastic article
Procédé pour la fabrication d'un objet moulé en matière plastique

(30) Priorität: 30.07.1992 DE 4225161
(43) Veröffentlichungstag der Anmeldung: 02.02.1994
(73) Patentinhaber: Gebr. Happich GmbH, D-42097 Wuppertal (DE); SCHADE KG, D-58815 Plettenberg (DE)
(72) Erfinder: Happich, Otto, D-5600 Wuppertal 1 (DE)

(56) Entgegenhaltungen:
- EP-A- 0 079 017
- EP-A- 0 480 153
- DE-B- 1 256 527
- GB-A- 2 057 967
- GB-A- 2 195 940
- PATENT ABSTRACTS OF JAPAN vol. 13, no. 446 (M-877)(3794) 6. Oktober 1989 & JP-A-11 71 836 (TOYODA GOSEI)

## Beschreibung

Die Erfindung bezieht sich auf ein Verfahren zum Herstellen eines Kunststofformteils mit einer Dekormaterialbahn als Bezug, bei dem eine plastifizierte Kunststoffmasse im plastifizierten Zustand einer offenen Formkavität eines aus unterer und oberer Werkzeughälfte bestehenden Formwerkzeugs zugeführt und durch Schließen des Werkzeugs gegen die zwischen den Werkzeughälften angeordnete Dekormaterialbahn formgebend verpreßt wird, wobei die Dekormaterialbahn größer als der Preßling bemessen und der Überstand um die Kanten des Preßlings nach dessen Verfestigung umgebugt wird.

Ein Verfahren der gattungsgemäßen Art ist durch die EP-A- 0 480 153 bekanntgeworden. In Spalte 6, Zeilen 16 bis 19 dieser Druckschrift findet sich der Hinweis auf eine Umbugbildung der Dekormaterialbahn. In Verbindung mit Fig. 3 der Druckschrift ist anzunehmen, daß der das Formteil überragende Überstand der Dekormaterialbahn nach dem Beschnitt umgebugt und mit der Rückseite des Formteils verklebt werden soll. Die Annahme findet durch interne Versuche ihre Bestätigung. Dabei hat sich herausgestellt, daß ein Auftragen von Kleber und die Herstellung einer Klebeverbindung relativ arbeitsaufwendig und teuer ist. Zudem kann es leicht zur Verschmutzung durch den Kleber wie auch zum Durchschlagen des Klebers durch die Dekormaterialbahn kommen, insbesondere dann, wenn diese aus einem textilen Material gebildet ist.

Der Erfindung liegt daher die Aufgabe zugrunde, ein Verfahren der eingangs genannten Art im Hinblick auf die Herstellung eines Umbugs zu verbessern, wobei die Herstellung eines sauberen Umbugs mit besonders einfachen Mitteln auch kostengünstig realisiert werden soll.

Zur Lösung dieser Aufgabe ist vorgesehen, daß die plastifizierte Kunststoffmasse zumindest bereichsweise auch gegen den Überstand der Dekormaterialbahnform gepreßt wird, und zwar unter Ausbildung einer Haut, die mit dem Überstand umgebugt und mit dem Rand oder der Rückseite des Preßlings verschweißt wird.

Für die Durchführung des erfindungsgemäßen Verfahrens bedarf es lediglich einer geringfügigen, die Bildung der Haut ermöglichenden Abänderung des jeweiligen Formwerkzeugs und des Schweißarbeitsganges, welcher aber wesentlich schneller und sauberer als ein Klebeverfahren zu bewerkstelligen ist. Dabei ist bevorzugterweise vorgesehen, daß die Haut am Überstand sowie der Rand und/oder die Rückseite des Preßlings im Umbugbereich einer Wärmebehandlung unterzogen werden und daß hiernach der Überstand mit Haut umgebugt und die Haut mit dem Rand oder der Rückseite des Preßlings thermisch verschweißt wird. Die Verschweißung soll also durch Wärme und Druck zustande kommen, was mit einfachen Hilfsmitteln wie Schweißspiegel und Formstempeln ggf. aber auch durch bloßes Handanlegen zu erreichen ist. Die am Überstand der Dekormaterialbahn angeordnete Haut dient als Schweißhilfsmittel und sorgt für eine innige Verbindung der Dekormaterialbahn mit dem Formling im Umbugbereich. Der Begriff Haut ist im weitesten Sinne zu verstehen und soll einen Dickenbereich von 0,2 bis 3 mm, bevorzugt 0,5 mm umfassen. Generell kann gesagt werden, daß die Haut einerseits dünn genug sein soll, um den Biegevorgang nicht zu behindern und andererseits dick genug sein soll, um eine zuverlässige Schweißverbindung herstellen zu können. Für den Formling wird ein thermoplastisches Kunststoffmaterial eingesetzt, wobei Polypropylen als besonders geeignet angesehen wird, weil dieses Material hervorragend zu recyceln ist.

Das erfindungsgemäße Verfahren wird nachfolgend anhand eines auf der Zeichnung dargestellten Ausführungsbeispiels erläutert. Es zeigen:
- Fig. 1: die schaubildliche Gesamtansicht einer Vorrichtung zum Herstellen von Kunststofformteilen,
- Fig. 2: einen vertikalen Teilschnitt durch das geschlossene Formwerkzeug nach Fig. 1
- Fig. 3: einen Schnitt durch ein formgebend verpreßtes Kunststofformteil mit Bezug und Umbug.

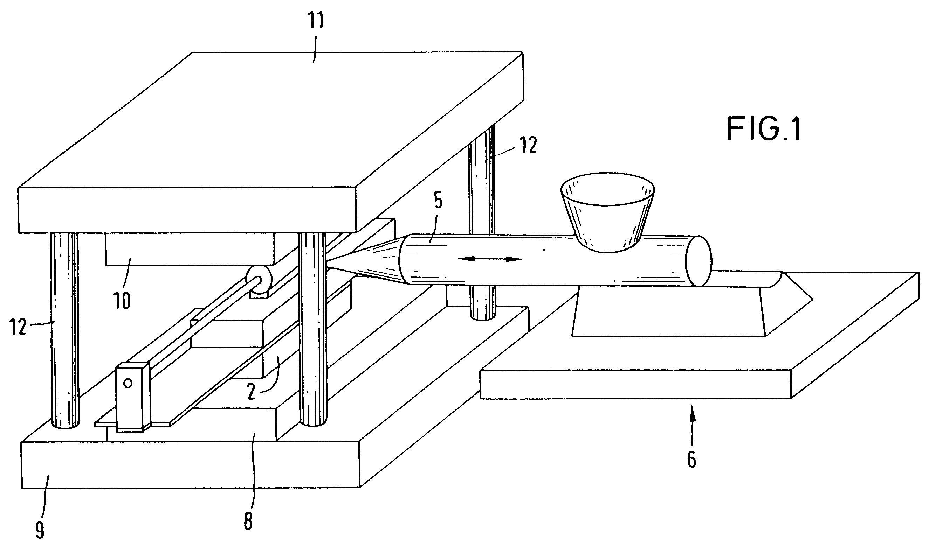

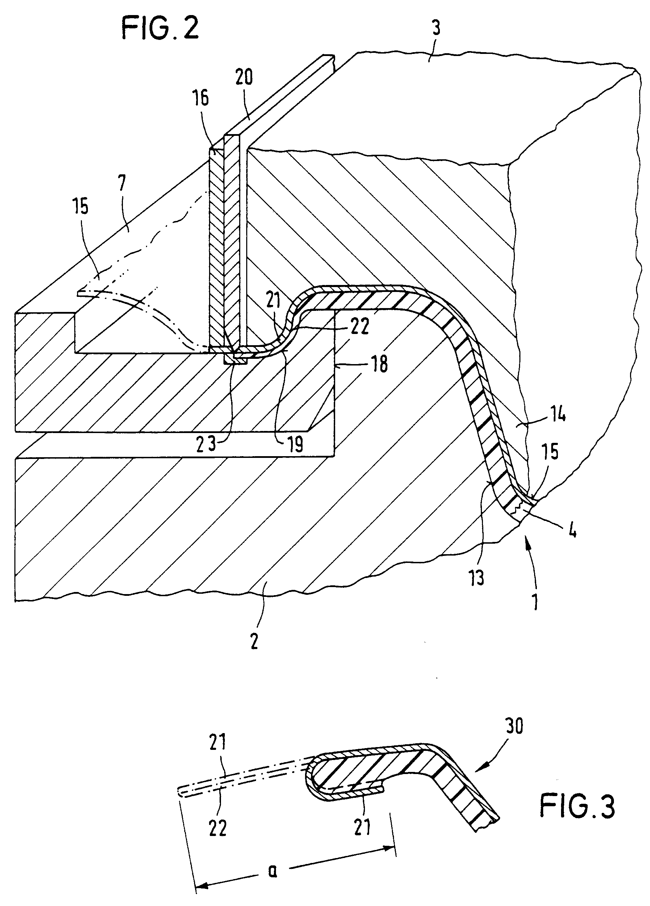

Die Vorrichtung nach Fig. 1 und 2 weist ein Formwerkzeug 1 mit einer unteren Werkzeughälfte 2 und einer oberen Werkzeughälfte 3 sowie einen zwischen den Werkzeughälften ausgebildeten Formhohlraum 4 (Kavität) auf. Die Vorrichtung umfaßt weiter eine, eine Plastifizierungseinrichtung 5 aufweisende Kunststoffverarbeitungsmaschine 6, Mittel zum Zuführen der plastifizierten Kunststoffmasse in die offene Formkavität 4 und einen zweiteiligen Spannrahmen mit einer in Fig. 2 gezeigten unteren Spannrahmenhälfte 7.

Die untere Werkzeughälfte 2 sitzt auf einer unteren Aufspannplatte 8, die wiederum von einer Werkzeugaufnahmeplatte 9 getragen wird. Die obere Werkzeughälfte 3, die aufgrund der gewählten Perspektive in Fig. 1 nicht zu sehen ist, sitzt an einer oberen Aufspannplatte 10, die wiederum an einer oberen Werkzeugaufnahmeplatte 11 befestigt ist. Über an sich bekannte Säulenführungen 12 sind die Werkzeughälften 2 und 3 relativ zueinander verfahrbar, und zwar aus einer offenen Position in eine geschlossene Position nach Fig. 2 und umgekehrt. Die untere Werkzeughälfte 2 weist einen Hohlraum 13 und die obere Werkzeughälfte einen darin einfahrbaren Kern 14 auf. Die Kavität 4 ist zwischen dem Hohlraum 13 und dem Kern 14 ausgebildet.

Der erwähnte Spannrahmen umfaßt die ebenfalls erwähnte untere Spannrahmennälfte 7 und eine obere Spannrahmennälfte. Im einfachsten Fall wird die obere Spannrahmenhälfte aus der oberen Werkzeughälfte 3 gebildet, so daß beim Zufahren des Werkzeugs 1 die Dekorationsmaterialbahn 15 außerhalb der Kavität 4 zwischen der oberen Werkzeughälfte 3 (als obere Spannrahmenhälfte) und der unteren Spannrahmenhälfte 7 eingeklemmt wird.

Im Ausführungbeispiel nach Fig. 2 ist eine separat ausgebildete obere Spannrahmenhälfte 16 dargestellt, die über nicht gezeigte Steuerungsmittel gegen die untere Spannrahmenhälfte verspannbar ist, derart, daß der zwischen den Spannrahmen eingelegte Dekorationsmaterialbahn-Zuschnitt beim Formungsprozeß zu schlupfen vermag.

Die in Fig. 2 gezeigte untere Spannrahmenhälfte 7 ist mit einer Tauchkante 18 und mit einer davon räumlich beabstandeten Trennebene 19 ausgebildet. Bei der Herstellung eines Kunststofformteils wird eine plastifizierte Kunststoffmasse mit einem vorgegebenen Massevolumen in den Hohlraum 13 der unteren Werkzeughälfte 2 abgelegt. Alsdann wird die obere Werkzeughälfte 3 und damit auch der Spannrahmen mit vorher eingespannter Dekorationsmaterialbahn 15 nach unten bewegt, also das Werkzeug geschlossen. Dabei wird die eingelegte Kunststoffmasse formgebend verpreßt, ein Vorgang der auch als Verdrängungsformen bezeichnet werden kann.

In Fig. 2 ist weiterhin gezeigt, daß die Vorrichtung mit einem Trennmesser 20 ausgerüstet ist, um einen Konturschnitt des Kunststofformteils zu ermöglichen. Das Trennmesser 20 ist in der oberen Werkzeughälfte 3 gelagert und kann z.B. durch die Öffnungsbewegung des Werkzeugs zwangsgesteuert werden. Es ist ebenfalls möglich, für das Trennmesser 20 nicht näher dargestellte mechanische und/oder hydraulische Steuerungsmittel vorzusehen. Die Schneide des Trennmessers 20 arbeitet gegen einen, in die untere Spannrahmenhälfte 7 eingelassenen Einsatz 21.

Nachdem das verpreßte Kunststoffmaterial verfestigt ist, wird das Kunststofformteil 30 dem Formwerkzeug 1 entnommen und mit einem Umbug (Fig. 3) versehen. Zum Herstellen des Umbugs ist vorgesehen, daß die das Kunststofformteil abdeckende Dekormaterialbahn 15 einen Überstand 21 aufweist und daß die plastifizierte Kunststoffmasse auch gegen den Überstand 21 formgepreßt wird. Hierdurch erhält der Überstand 21 rückseitig einen hautförmigen Belag 22 aus thermoplastischem Kunststoffmaterial, der als Schweißhilfsmittel bei der Bildung des Umbugs dient.

Fig. 3 zeigt einen Endbereich eines Kunststofformteils 30, wobei mit strichpunktierten Linien die Formgebung angedeutet ist, die das Kunststofformteil bei der Entnahme aus dem Formwerkzeug 1 in etwa aufweist. Der in Fig. 3 mit a bezeichnete Bereich wird thermisch behandelt (Schweißspiegel od. dgl.), so daß es zur oberflächenseitigen Plastifizierung des Kunststoffmaterials kommt. Hiernach wird der Überstand 21 umgebugt und die Haut 22 gegen die Rückseite des Kunststofformteils 30 gepreßt und dabei thermisch verschweißt. Der Endzustand des Umbugs ist in Fig. 3 mit ausgezogenen Linien dargestellt. Es versteht sich, daß bei der Bildung des Umbugs Hilfsmittel, wie Schieber und Stempel eingesetzt werden können und daß bei einer Großserienfertigung auch entsprechend ausgerüstete Vorrichtungen zum Einsatz kommen. Es versteht sich ferner, daß das Kunststofformteil 30 langgestreckt, eckig oder rund sein kann und daß die Dekormaterialbahn um das Kunststofformteil lediglich um seine Längskanten herum gebugt werden kann. Es können aber auch samtliche Kanten des Kunststofformteils umgebugt werden, wobei es ggf. erforderlich ist, den Überstand 21 im Bereich scharfer Radien mit Einschnitten zu versehen.

## Patentansprüche

1. Verfahren zum Herstellen eines Kunststofformteils mit einer Dekormaterialbahn als Bezug, bei dem eine plastifizierte Kunststoffmasse im plastifizierten Zustand einer offenen Formkavität eines aus unterer und oberer Werkzeughälfte bestehenden Formwerkzeugs zugeführt und durch Schließen des Werkzeugs gegen die zwischen den Werkzeughälften angeordnete Dekormaterialbahn formgebend verpreßt wird, wobei die Dekormaterialbahn größer als der Preßling bemessen und der Überstand um die Kanten des Preßlings nach dessen Verfestigung umgebugt wird, dadurch gekennzeichnet, daß die plastifizierte Kunststoffmasse zumindest bereichsweise auch gegen den Überstand der Dekormaterialbahn formgepreßt wird, und zwar unter Ausbildung einer Haut, die mit dem Überstand umgebugt und mit dem Rand oder der Rückseite des Preßlings verschweißt wird.

2. Verfahren nach Anspruch 1, dadurch gekennzeichnet, daß die Haut am Überstand sowie der Rand und/oder die Rückseite des Preßlings im Umbugbereich einer Wärmebehandlung unterzogen werden und daß hiernach der Überstand mit Haut umgebugt und die Haut mit dem Rand oder der Rückseite des Preßlings thermisch verschweißt wird.

## Claims

1. Method for manufacturing a moulded plastic article with a decorative material web as covering, in which a plasticated plastic material is fed, in the plasticated state, to an open mould cavity of a moulding tool comprising lower and upper mould halves and, by closing of the mould, is pressed in a shaping manner against the decorative material web arranged between the mould halves, the decorative material web being dimensioned larger than the moulding, and the overhang around the edges of the moulding being folded around after the said moulding has solidified, characterized in that the plasticated plastic material is compression-moulded, at least in regions, also against the overhang of the decorative material web, with the formation of a skin which is folded over together with the overhang and is welded to the edge or to the reverse side of the moulding.

2. Method according to Claim 1, characterized in that the skin at the overhang and at the edge and/or the reverse side of the moulding in the folded-over region are subjected to a heat treatment and in that thereafter the overhang with the skin is folded over and the skin is thermally welded to the edge or to the reverse side of the moulding.

## Revendications

1. Procédé pour la fabrication d'un objet moulé en matière plastique avec un recouvrement constitué par une bande de matière décorative, dans lequel une masse de matière plastique plastifiée est introduite, à l'état plastifié, dans une cavité de moulage ouverte d'un outil de moulage composé d'une moitié d'outil inférieure et d'une moitié d'outil supérieure et est moulée par compression, par fermeture de l'outil, contre la bande de matière décorative disposée entre les moitiés d'outil, dans lequel la bande de matière décorative est de plus grandes dimensions que la pièce moulée et l'excédent est rabattu autour des arêtes de la pièce moulée après solidification de celle-ci, caractérisé en ce que la masse de matière plastique plastifiée est également moulée par compression, au moins localement, contre l'excédent de la bande de matière décorative, et en formant ainsi une peau, qui est rabattue avec l'excédent et est soudée avec le bord ou le dos de la pièce moulée.

2. Procédé suivant la revendication 1, caractérisé en ce que la peau formée sur l'excédent ainsi que le bord et/ou le dos de la pièce moulée sont soumis à un traitement thermique dans la région de rabattement et en ce qu'ensuite l'excédent avec la peau est rabattu et la peau est soudée thermiquement avec le bord ou le dos de la pièce moulée.
